(19) Europäisches Patentamt
European Patent Office
Office européen des brevets

(11) **EP 3 037 810 B1**

(12) **FASCICULE DE BREVET EUROPEEN**

(45) Date de publication et mention
de la délivrance du brevet:
**25.10.2017 Bulletin 2017/43**

(51) Int Cl.:
***G01N 27/22*** *(2006.01)*

(21) Numéro de dépôt: **15198576.9**

(22) Date de dépôt: **09.12.2015**

(54) **CAPTEUR D'HUMIDITE AMELIORE**

VERBESSERTER FEUCHTIGKEITSSENSOR

IMPROVED MOISTURE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2014 EP 14200095**

(43) Date de publication de la demande:
**29.06.2016 Bulletin 2016/26**

(73) Titulaire: **EM Microelectronic-Marin SA
2074 Marin (CH)**

(72) Inventeurs:
 • **Novac, Pinchas
 2000 Neuchâtel (CH)**
 • **Belkacem, Amrane
 F-25300 Pontarlier (FR)**
 • **Dupraz, Yves
 1441 Valeyres-sous-Montagny (CH)**

(74) Mandataire: **Goulette, Ludivine et al
ICB
Ingénieurs Conseils en Brevets SA
Faubourg de l'Hôpital 3
2001 Neuchâtel (CH)**

(56) Documents cités:
**EP-A1- 2 420 826**      **WO-A1-2007/036922**
**WO-A2-2009/066992**   **US-A1- 2007 131 020**

• **GU L ET AL: "A novel capacitive-type humidity sensor using CMOS fabrication technology", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, vol. 99, no. 2-3, 1 mai 2004 (2004-05-01), pages 491-498, XP004505806, ISSN: 0925-4005, DOI: 10.1016/J.SNB.2003.12.060**
• **LACONTE J ET AL: "High-sensitivity capacitive humidity sensor using 3-layer patterned polyimide sensing film", PROCEEDINGS OF IEEE SENSORS 2003 (IEEE CAT. NO.03CH37498) IEEE PISCATAWAY, NJ, USA; [IEEE INTERNATIONAL CONFERENCE ON SENSORS], IEEE, vol. 1, 22 octobre 2003 (2003-10-22), pages 372-377, XP010692286, DOI: 10.1109/ICSENS.2003.1278961 ISBN: 978-0-7803-8133-9**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un capteur d'humidité comprenant une paque de base en silicium sur laquelle au moins une pluralité de couche diélectrique, chacune munie d'une zone métallique et une couche métallique sont agencées, ladite couche métallique étant gravé pour former deux électrodes comprenant chacune une armature munie d'une multitude de bras, ces armatures étant montées de sorte que les bras de chaque armatures soient entrelacés pour avoir des bras placées en regard les uns des autres.

ART ANTERIEUR

Il est connu des capteurs d'humidités pour circuit électronique. Un tel capteur d'humidité est un capteur d'humidité à peignes interdigités.

Un tel capteur se compose d'un d'une base de wafer silicium sur lequel au moins une couche de diélectrique inter-niveau (ILD) est placée. Sur cette couche inter-niveau, une pluralité de couche diélectrique intermétallique (IMD). Ces couches, préférentiellement au nombre de trois, sont superposées et comprennent chacune des zones métallique pour de la conduction électrique.

Au-dessus de ces couches diélectriques intermétalliques, une couche conductrice servant pour peigne interdigité est réalisée, cette couche pouvant être en aluminium. Cette couche d'aluminium est ensuite gravée pour former ledit peigne. Une fois le peigne formé, le tout est recouvert d'une couche de passivation.

Cette plaque gravée est ensuite stockée puis utilisée lors d'une seconde phase de fabrication lors de laquelle elle est préparée pour utilisation. Cette seconde phase de fabrication consiste en une étape d'ouverture durant laquelle la couche de passivation est gravée au niveau du peigne et au niveau des plages de contact. Cette étape de gravure de la passivation permet de graver la couche de passivation située entre les différentes branches du peigne.

Une fois cette étape terminée, une couche de protection de l'aluminium contre la corrosion est déposée, cette couche pouvant être une couche de nitrure d'oxyde.

La dernière étape consiste à déposer une couche de polymide pour protéger le tout.

Toutefois, cette construction présente des inconvénients. Un premier inconvénient vient de la fabrication en deux phases dudit capteur. En effet, le fait d'avoir deux phases distinctes pour la fabrication du capteur impose la présence de cycles thermiques supplémentaires. Ces cycles thermiques supplémentaires entraînent l'apparition de contraintes thermiques supplémentaires sur la plaque et le peigne interdigité pouvant détériorer ledit capteur d'humidité.

Un second inconvénient vient de la gravure lors de la seconde phase. En effet, durant la seconde phase durant laquelle la couche de passivation est gravée, il y a apparition de capacités parasites. Ces capacités parasites proviennent de la gravure qui n'est pas parfaite c'est-à-dire dont les flancs ne sont pas parfaitement droits. Par conséquent, des résidus de la couche de passivation sont présents entraînant l'apparition de ces capacités parasites qui détériorent les performances.

On trouve des exemples de capteurs capacitifs d'humidité dans GU et al., "A novel capacitive-type humidity sensor using CMOS fabrication technology" (2004, Sensors and Acuators B) et dans EP2420826.

RESUME DE L'INVENTION

A cet effet, la présente invention consiste en un capteur d'humidité comprenant une plaque de base en silicium sur laquelle au moins une pluralité de couches diélectriques, chacune munie d'une zone métallique, et une couche métallique sont agencées, ladite couche métallique étant gravée pour former deux électrodes comprenant chacune une armature munie d'une multitude de bras, ces armatures étant montées de sorte que les bras de chaque armatures soient entrelacés pour avoir des bras placés en regard les uns des autres et séparés par des interstices, caractérisé en ce que ledit capteur comprend en outre une couche de passivation déposée sur la couche métallique gravée et en ce que ladite couche de passivation est gravée de sorte que les interstices entre les bras placées en regard les uns des autres soient creusés en s'étendant dans la couche diélectrique sur laquelle la couche métallique est déposée.

Dans un premier mode de réalisation avantageux, le capteur comprend en outre une couche de protection anticorrosion protégeant la couche métallique de la corrosion.

Dans un second mode de réalisation avantageux, la couche de protection anticorrosion est réalisée en oxyde de nitrure.

Dans un troisième mode de réalisation avantageux, la couche de protection réalisée en oxyde de nitrure a une épaisseur dont la valeur est égale au maximum à 10% de la distance des interstices entre les bras placées en regard les uns des autres.

Dans un quatrième mode de réalisation avantageux, le capteur comprend en outre une couche de polyimide servant de diélectrique de détection.

Dans un cinquième mode de réalisation avantageux, une couche de passivation peut être intercalée déposée directement sur la couche métallique au niveau de zones inutiles.

Dans un autre mode de réalisation avantageux, le capteur est agencé pour être intégré dans une circuiterie comportant un convertisseur capacité/tension, d'un convertisseur analogique digital et d'une interface digitale.

Dans un autre mode de réalisation avantageux, la circuiterie comporte en outre des plages de contact permettant de la connecter à un microcontrôleur.

L'invention concerne en outre un procédé de fabrication d'un capteur d'humidité comprenant les étapes suivantes :

    1) se munir d'une plaque de base ;

    2) déposer au moins une couche diélectrique, ladite couche diélectrique étant munie d'une zone métallique et déposer une couche métallique sur la dernière couche diélectrique ;

    3) graver ladite couche métallique pour former deux électrodes comprenant chacune une armature munie d'une multitude de bras, ces armatures étant sont montées de sorte que les bras de chaque armatures soient entrelacés pour avoir des bras placées en regard les uns des autres et séparés par des interstices;

    4) déposer une couche de passivation sur ladite couche métallique gravée ;

    5) graver ladite couche de passivation au niveau des deux électrodes, ladite gravure étant réalisée de sorte à s'étendre, au niveau des interstices entre les bras placées en regard les uns des autres, dans la couche diélectrique sur laquelle la couche métallique est déposée.

Dans un premier mode de réalisation avantageux, le procédé comprend en outre une étape 6) consistant à déposer une couche de protection anticorrosion protégeant la couche métallique de la corrosion

Dans un second mode de réalisation avantageux, le procédé comprend en outre une étape 7) consistant à graver ladite couche de passivation au niveau d'au moins une plage de contact gravée lors de l'étape 3).

Dans un troisième mode de réalisation avantageux, le procédé comprend en outre une étape 8) consistant à déposer une couche de polyimide sur la dernière couche déposée.

Dans un quatrième mode de réalisation avantageux, le procédé comprend en outre une étape 9) consistant à graver ladite couche de polyimide au niveau des plages de contact pour permettre l'agencement de moyens de contact.

Dans un autre mode de réalisation avantageux, le procédé comprend en outre une étape 8bis) consistant à agencer des moyens se contact.

Dans un autre mode de réalisation avantageux, le procédé comprend en outre une étape 10) consistant à déposer une couche de polyimide sur la dernière couche déposée.

Dans un autre mode de réalisation avantageux, le procédé comprend en outre une étape 5bis) consistant à nettoyer ledit capteur.

## BREVE DESCRIPTION DES FIGURES

Les buts, avantages et caractéristiques de l'invention apparaîtront plus clairement dans la description détaillée suivante d'au moins une forme de réalisation de l'invention donnée uniquement à titre d'exemple non limitatif et illustrée par les dessins annexés sur lesquels :

    - Les figures 1 à 9 représentent schématiquement les différentes étapes de fabrication d'un capteur d'humidité selon l'invention;
La figure 10 représente un diagramme d'étapes du procédé de fabrication d'un capteur d'humidité selon l'invention.

## DESCRIPTION DETAILLEE

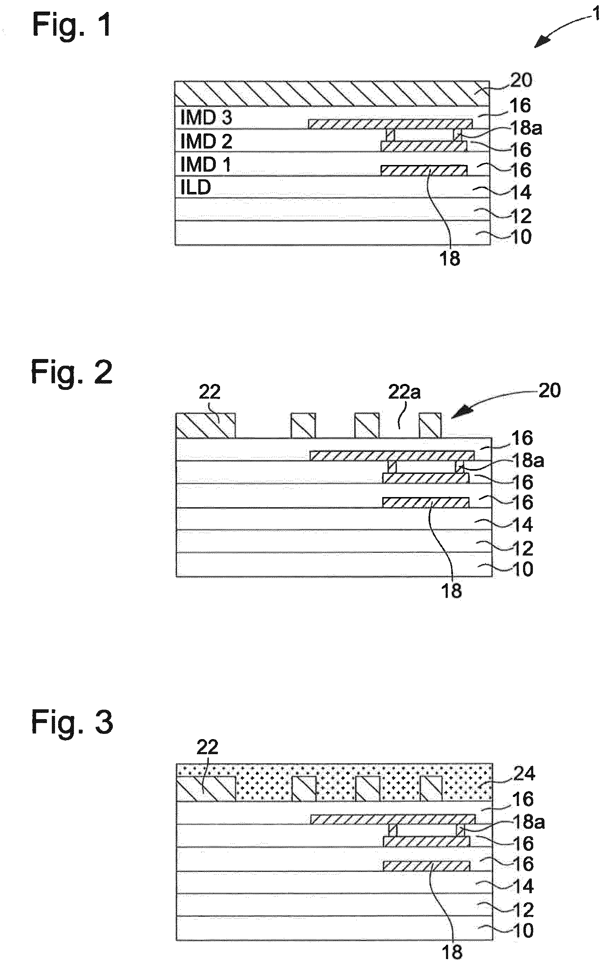

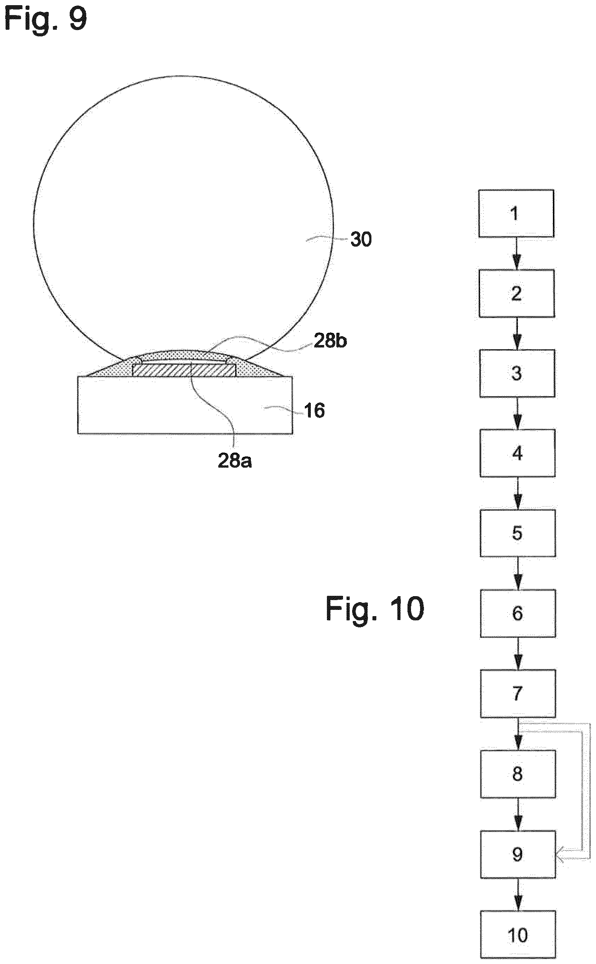

Sur la figure 1 est représenté un capteur d'humidité 1 selon l'invention. Un tel capteur comprend une plaque de base 10 en silicium appelé wafer. Cette plaque de base peut également comprendre la circuiterie dans lequel le capteur sera intégré. Cette circuiterie est composé d'un convertisseur capacité/tension, d'un convertisseur analogique numérique et d'une interface numérique, le tout pouvant être connecté à un microcontrôleur agencé sur une autre plaque de base via des plages de contact. Bien entendu, il peut être prévu que le capteur, la circuiterie et le microcontrôleur soient sur des plaques de base différentes ou sur la même plaque de base ou que la circuiterie et le microcontrôleur soient sur la même plaque. Cette plaque de base 10 sert de substrat pour ledit capteur et une première étape consiste à se munir de cette plaque de base. La figure 10 représente les différentes étapes de fabrication d'un capteur d'humidité selon l'invention.

Sur ce substrat 10, différentes couches sont successivement déposées lors d'une seconde étape. Une première couche 12 est déposée. Cette couche comprend une zone dite active et une zone de dioxyde de silicium.

Par-dessus cette première couche, une couche de diélectrique inter niveau (ILD) 14 est déposée.

Par la suite, une pluralité de couches diélectriques intermétalliques 16 (IMD) sont déposées. Ces couches diélectriques intermétalliques 16, préférentiellement au nombre de trois, sont superposées et comprennent chacune des zones métallique 18 pour de la conduction électrique. Ces zones métalliques 18 pouvant être reliées ensembles par des connecteurs de type VIA 18a

Au-dessus de ces couches diélectriques intermétalliques 16, une couche conductrice 20 servant de peigne interdigité est réalisée, cette couche métallique 20 étant déposée lors de la seconde étape et peut être en aluminium comme visible à la figure 1. Cette seconde étape est une étape connue de l'homme du métier.

Cette couche d'aluminium 20 est gravée lors d'une troisième étape pour former ledit peigne comme visible à la figure 2. Un peigne interdigital est généralement formé par deux électrodes 22 comprenant chacune une armature munie d'une multitude de bras. Ces armatures sont montées de sorte que les bras de chaque armature soient entrelacés. On obtient ainsi un capteur d'humidité capacitif.

Une fois le peigne formé, une quatrième étape consiste à recouvrir le tout d'une couche de passivation 24. Cette couche de passivation 24 est utilisée pour protéger la couche d'aluminium 20 contre les agressions externes, comme visible à la figure 3.

Une fois cette couche de passivation 24 gravée, une étape d'ouverture ou cinquième étape est réalisée. Avantageusement selon l'invention, l'étape d'ouverture se fait lors de la même phase c'est-à-dire dans la continuité des étapes précédentes. On comprend alors que les différentes étapes permettant d'obtenir le capteur d'humidité se déroulent durant un seul flux de procédure c'est-à-dire que les différentes étapes du procédé de fabrication sont réalisées les unes à la suite des autres sans rupture des conditions nécessaires à la réalisation de ces étapes. Cette caractéristique permet alors d'avoir une réduction du temps de cycle.

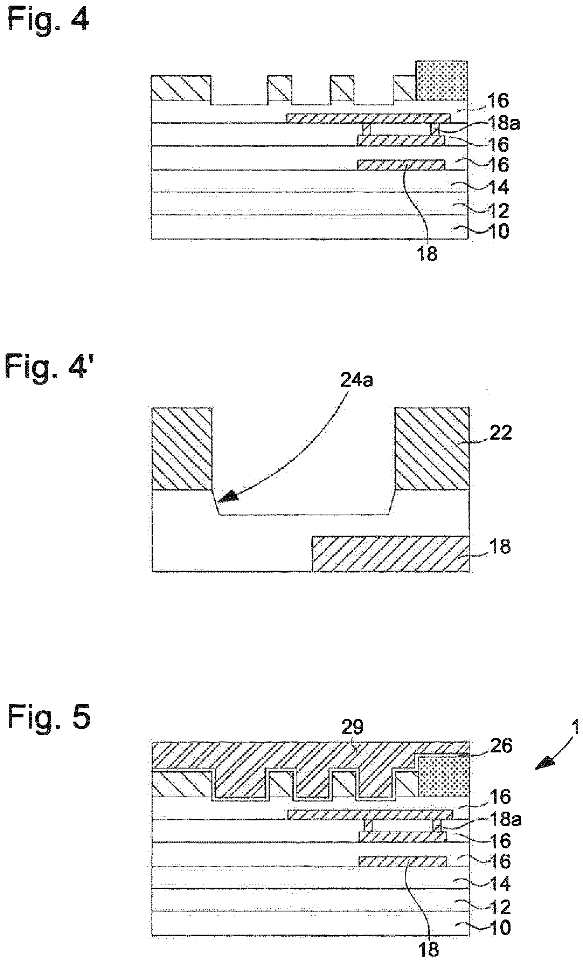

Cette étape d'ouverture consiste premièrement à enlever la couche de passivation 24 au niveau du peigne interdigité formant le capteur 1 par gravure. Une fois cette couche de passivation enlevée, l'invention procède astucieusement à continuer la gravure. En effet, la couche de passivation 24 est déposée sur le peigne, cette couche 24 se déposant alors dans les interstices 22a entre les différents bras des armatures constituant le peigne. Lorsque cette couche de passivation 24 est enlevée, elle ne l'est pas entièrement de sorte que des résidus 24a subsistent au niveau des parois verticales des parties du peigne comme visible à la figure 4'. Ces résidus 24a entre deux bras du peigne en regard l'un de l'autre forment un condensateur ayant une capacité dont la formule est : $C = \varepsilon \times \dfrac{S}{d}$ avec S : surface des armatures en regard, d : distance entre les armatures et $\varepsilon$ la permittivité du diélectrique, cette capacité étant en parallèle avec la capacité de détection et réduit la sensibilité du capteur d'humidité.

Cette étape d'ouverture se propose de graver dans les interstices 22a entre les différentes parties de l'armature du peigne. Cette gravure est faite astucieusement pour également graver dans la dernière couche diélectrique intermétallique, l'ouverture de l'espace entre les bras métalliques se fait en descendant jusqu'au métal précédent c'est-à-dire la zone métallique de la dernier couche diélectrique intermétallique 16 avec des profils de tranchées obtenus quasi-verticaux, sans diélectrique sur les parois latérales de la capacité et sans résidus par un nettoyage adéquat comme visible à la figure 4.

Ainsi, en creusant dans la couche diélectrique 16, on augmente la distance entre les deux armatures du condensateur, chaque armature se présentant ici sous la forme des résidus de la couche de passivation.

Par ailleurs, en gravant la couche de diélectrique 16 en plus de la couche de passivation, on diminue la taille des résidus formant les armatures et par conséquent, la surface diminue impliquant une diminution de la valeur de capacité parasite. On obtient alors une sensibilité du capteur d'humidité 1 supérieure au maximum théorique publié dans la littérature.

Une cinquième étape bis peut être opérée et consiste en un nettoyage de la surface de sorte à éliminer les impuretés présentes et dues à l'étape de gravure.

Une fois cette cinquième étape réalisée, une sixième étape consistant à déposer une couche de protection 26 (capping layer ou couche de recouvrement, barrière d'humidité, etc) est opérée comme visible à la figure 5. En effet, il existe un risque de corrosion de l'aluminium des électrodes en contact avec le polyimide qui est une couche de protection déposée ultérieurement, et la diffusion de l'aluminium dans le polyimide. Cette couche de protection permet d'empêcher la diffusion de l'aluminium de la couche métallique 20 dans le polyimide 29. Dans le cas de notre solution, cette couche de protection est réalisée en oxyde de nitrure (SiONx) avec une épaisseur dont la valeur est égale au maximum à 10% de la distance des interstices entre les bras placées en regard les uns des autres. Dans un exemple, si la distance est égale à 440nm, l'épaisseur sera de 20nm ±2nm.

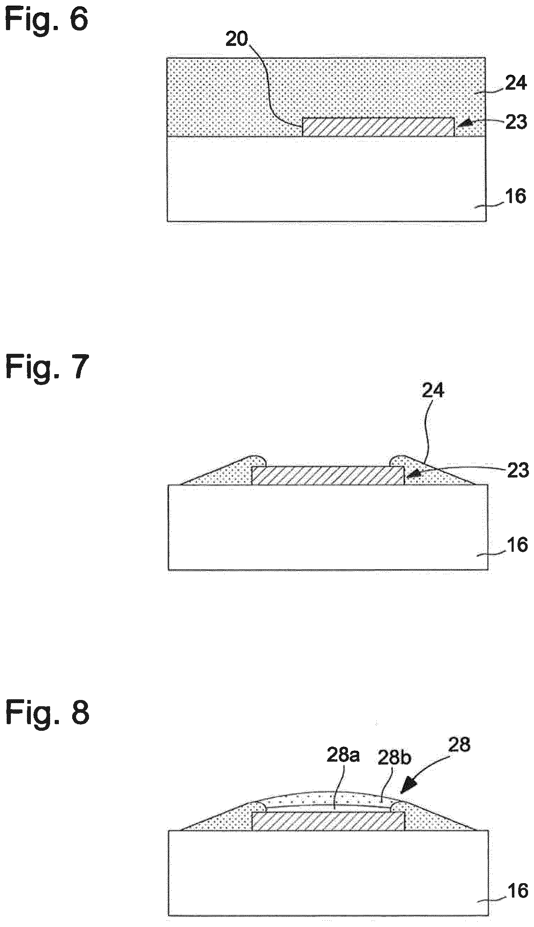

Dans une septième étape, la couche de passivation 24 au niveau des plages de contact 23 est ouverte. Ces plages de contact 23 sont celles de la circuiterie dans laquelle le capteur est intégré. Ces plages sont réalisées sur une couche de métal déposée sur un diélectrique intermétallique. Les plages de contact ainsi dégagées permettent d'y placer les moyens de contacts comme visible aux figures 6 et 7.

Les moyens de contact se présentent sous deux formes différentes et sont réalisés lors d'une étape de mise en place des contacts.

Selon une première forme, les moyens de contact sont un fil de connexion utilisant la méthode de câblage par fil ou pontage (traduction de wire bonding). En effet, le câblage par fil ou pontage est une des techniques utilisées pour effectuer les connexions électriques entre le boîtier et le circuit intégré. Le câblage est simplement réalisé par un fil (ou pont) soudé entre les deux plots de connexion prévus à cet usage sur chacun des éléments. La soudure est généralement réalisée par ultrasons. Le matériau du fil est de l'aluminium, de l'or ou du cuivre. Le diamètre du fil est de l'ordre de 20 μm.

Selon une seconde forme visible aux figures 8 et 9, les moyens de contact se présentent sous la forme d'une bille. En effet, cette technique de connexion à billes (appelé solder bumping en anglais) consiste à déposer une bille d'étain 30 sur les plages de contacts du circuit, ces dernières pouvant être réalisés en aluminium. Pour faire adhérer cette bille, il est prévu d'avoir une couche d'accroche 28. Une telle couche d'accroche est composée d'une couche de nickel 28a sur laquelle une couche d'or 28b est placée comme visible à la figure 8. La bille 30 est ensuite placée sur cette couche d'accroche 28 comme visible à la figure 9.

Une technique utilisée pour le dépôt de la couche d'accroche est une technique dite electroless. Cette technique comprend une première étape de nettoyage de la plage de contact en aluminium pour enlever les oxydes puis à enlever l'oxyde d'aluminium dans une seconde étape. Une troisième étape consiste à activer l'aluminium avec une couche de Zinc, cette couche de Zinc étant retirée lors d'une quatrième étape. Une cinquième étape est de nouveau une étape d'activation de la plage de contact en aluminium pour ensuite déposer une couche de Nickel. Enfin une couche d'or est déposée.

Cette technique utilise avantageusement des bains chimiques pour les différentes étapes de sorte à ne pas soumettre la couche de polyimide à des variations de température trop importante risquant de la détériorer et ainsi de diminuer les performances du capteur. En effet, cette technique electroless est utilisée dans le cadre du procédé selon l'invention car elle permet d'éviter les cassures des conditions de température lors du process de fabrication des bumps. Etant donné que le polyimide est sensible à une telle rupture, l'utilisation de cette technique électrodes est rendu nécessaire.

Selon un mode de réalisation, une huitième étape est réalisée après l'étape d'ouverture de la couche de passivation 24 au niveau des plages de contact. Cette huitième étape consiste à recouvrir l'ensemble du circuit avec une couche de polyimide 29 comme visible à la figure 5. Cette couche de polyimide 29 est utilisée comme diélectrique de détection. En effet, le polyimide est la couche qui va réagir avec l'humidité afin de modifier la constante diélectrique dans les interstices 22a entre les bras placées en regard les uns des autres. Cette modification des caractéristiques du diélectrique entrainent une modification de la valeur de la capacité. Suite à cela, l'étape de mise en place des contacts ou neuvième étape est effectuée et consiste à graver le polyimide 29 au niveau des plages de contact pour ensuite déposer la couche d'accroche 28 et mettre en place la ou les billes 30 servant de moyens de contact.

Selon un autre mode de réalisation, l'étape de mise en place des contacts appelé étape 8bis est effectuée après la septième étape et consiste à graver la couche de passivation au niveau des plages de contact pour ensuite déposer la couche d'accroche 28 et mettre en place la ou les billes servant de moyens de contact. Après cela, une étape appelé dixième étape est réalisée et consiste à recouvrir le circuit hormis les plages de contact avec une couche de polyimide. Cette couche de polyimide 29 peut être déposée par une méthode de dépôt local par jet.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention défini par les revendications annexées.

**Revendications**

1. Procédé de fabrication d'un capteur d'humidité (1) comprenant les étapes suivantes :

   1) se munir d'une plaque de base (10) ;
   2) déposer une pluralité de couches diélectriques (16) planes, de sorte à superposer lesdites couches diélectriques et de sorte que chaque couche diélectrique déposée sur une autre couche diélectrique la recouvre intégralement, au moins une couche diélectrique étant munie d'une zone métallique (18) placée en contact avec la couche que ladite couche diélectrique recouvre, et déposer une couche métallique (20) sur la dernière couche diélectrique de manière à placer la couche métallique (20) et la dernière couche diélectrique en contact ;
   3) graver ladite couche métallique pour former deux électrodes (22) comprenant chacune une armature munie d'une multitude de bras, ces armatures étant montées de sorte que les bras de chaque armatures soient entrelacés pour avoir des bras placées en regard les uns des autres et séparés par des interstices (22a);
   4) déposer une couche de passivation (24) sur ladite couche métallique gravée ;

   **caractérisé par** l'étape suivante,

   5) graver ladite couche de passivation (24) au niveau des deux électrodes, ladite gravure étant réalisée de sorte à s'étendre, au niveau des interstices (22a) entre les bras placées en regard les uns des autres, dans la dernière couche diélectrique (16), et la gravure étant réalisée de sorte à enlever les zones de la couche de passivation se trouvant sur les bras.

2. Procédé selon la revendication 1, **caractérisé en ce qu'**il comprend en outre une étape 6) consistant à déposer une couche de protection anticorrosion (26) protégeant la couche métallique de la corrosion

3. Procédé selon les revendications 1 ou 2, **caractérisé en ce qu'**il comprend en outre une étape 7) consistant à graver ladite couche de passivation (24) au niveau d'au moins une plage de contact gravée lors de l'étape 3).

4. Procédé selon la revendication 3, **caractérisé en ce qu'**il comprend en outre une étape 8) consistant à déposer une couche de polyimide (29) sur la dernière couche déposée.

**5.** Procédé selon la revendication 4, **caractérisé en ce qu'**il comprend en outre une étape 9) consistant à graver ladite couche de polyimide (29) au niveau des plages de contact (23) pour permettre l'agencement de moyens de contact.

**6.** Procédé selon la revendication 3, **caractérisé en ce qu'**il comprend en outre une étape 8bis) consistant à agencer des moyens se contact.

**7.** Procédé selon la revendication 6, **caractérisé en ce qu'**il comprend en outre une étape 10) consistant à déposer une couche de polyimide (29) sur la dernière couche déposée.

**8.** Procédé selon la revendication 1, **caractérisé en ce qu'**il comprend en outre une étape 5bis) consistant à nettoyer ledit capteur (1).

**9.** Procédé selon la revendication 6, **caractérisé en ce que** ladite étape 8bis) consistant à agencer les moyens de contact utilise une technique de dépôt de la couche d'accroche dite electroless.

**10.** Procédé selon l'une des revendications 1 à 5, **caractérisé en ce que** lesdites étapes sont les unes à la suite des autres sans rupture des conditions nécessaires leur réalisation.

**11.** Capteur d'humidité (1) obtenu par le procédé de fabrication selon l'une des revendications 1 à 10.

**Patentansprüche**

**1.** Verfahren zum Herstellen eines Feuchtigkeitssensors (1), umfassend die folgenden Schritte:

1) Bereitstellen einer Grundplatte (10);
2) Ablagern einer Mehrzahl ebener dielektrischer Schichten (16), derart, dass die dielektrischen Schichten übereinander gelegt sind, und derart, dass jede dielektrische Schicht, die auf einer anderen dielektrischen Schicht abgelagert ist, diese vollständig bedeckt, wobei mindestens eine dielektrische Schicht mit einem metallischen Bereich (18) versehen ist, der in Kontakt mit der Schicht angeordnet ist, die die dielektrische Schicht abdeckt, und Ablagern einer metallischen Schicht (20) auf der letzten dielektrischen Schicht, derart, dass die metallische Schicht (20) und die letzte dielektrische Schicht in Kontakt gebracht werden;
3) Ätzen der metallischen Schicht, um zwei Elektroden (22) zu bilden, die jeweils eine Belegung aufweisen, die mit mehreren Armen versehen ist, wobei diese Belegungen in einer Weise angeordnet sind, dass die Arme jeder der Belegungen ineinander verschachtelt sind, um Arme zu haben, die einander gegenüber angeordnet sind und durch Zwischenräume (22a) voneinander getrennt sind;
4) Ablagern einer Passivierungsschicht (24) auf der geätzten metallischen Schicht;

**gekennzeichnet durch** den folgenden Schritt:

5) Ätzen der Passivierungsschicht (24) auf Höhe der beiden Elektroden, wobei die Ätzung in einer Weise durchgeführt wird, dass sie sich auf Höhe der Zwischenräume (22a) zwischen den einander gegenüber angeordneten Armen in der letzten dielektrischen Schicht (16) erstreckt, und die Ätzung in einer Weise durchgeführt wird, dass die Bereiche der Passivierungsschicht, die sich über den Armen befinden, abgetragen werden.

**2.** Verfahren nach Anspruch 1, **dadurch gekennzeichnet, dass** es ferner einen Schritt 6) umfasst, der darin besteht, eine Antikorrosions-Schutzschicht (26) abzulagern, die die metallische Schicht vor Korrosion schützt.

**3.** Verfahren nach den Ansprüchen 1 oder 2, **dadurch gekennzeichnet, dass** es ferner einen Schritt 7) umfasst, der darin besteht, die Passivierungsschicht (24) zumindest auf Höhe eines Kontaktbereichs, der im Schritt 3) geätzt wird, zu ätzen.

**4.** Verfahren nach Anspruch 3, **dadurch gekennzeichnet, dass** es ferner einen Schritt 8) umfasst, der darin besteht, auf der letzten abgelagerten Schicht eine Polyimidschicht abzulagern.

**5.** Verfahren nach Anspruch 4, **dadurch gekennzeichnet, dass** es ferner einen Schritt 9) umfasst, der darin besteht, die Polyimidschicht (29) auf Höhe der Kontaktbereiche (23) zu ätzen, um die Anordnung von Kontaktmitteln zu ermöglichen.

**6.** Verfahren nach Anspruch 3, **dadurch gekennzeichnet, dass** es ferner einen Schritt 8bis) umfasst, der darin besteht, Kontaktmittel anzuordnen.

**7.** Verfahren nach Anspruch 6, **dadurch gekennzeichnet, dass** es ferner einen Schritt 10) umfasst, der darin besteht, auf der letzten abgelagerten Schicht eine Polyimidschicht (29) abzulagern.

**8.** Verfahren nach Anspruch 1, **dadurch gekennzeichnet, dass** es ferner einen Schritt 5bis) umfasst, der darin besteht, den Sensor (1) zu reinigen.

**9.** Verfahren nach Anspruch 6, **dadurch gekennzeichnet, dass** der Schritt 8bis), der darin besteht, die Kontaktmittel anzuordnen, eine sogenannte stromlose Technik zum Ablagern der Befestigungsschicht verwendet.

10. Verfahren nach einem der Ansprüche 1 bis 5, **dadurch gekennzeichnet, dass** die Schritte nacheinander ohne Unterbrechung der für ihre Ausführung notwendigen Bedingungen ausgeführt werden.

11. Feuchtigkeitssensor (1), der durch das Herstellungsverfahren nach einem der Ansprüche 1 bis 10 erhalten wird.

**Claims**

1. Method for producing a humidity sensor (1) comprising the following steps:

   1) providing a base plate (10);
   2) depositing a plurality of flat dielectric layers (16), in such a way as to superimpose said dielectric layers and in such a way that each dielectric layer deposited on another dielectric layer, covers it completely, at least one dielectric layer being provided with a metallic zone (18) placed in contact with the layer that said dielectric layer covers, and depositing a metallic layer (20) on the last dielectric layer in such a way as to place the metallic layer (20) and the last dielectric layer in contact;
   3) etching said metallic layer in order to form two electrodes (22), each comprising an armature provided with a multitude of arms, said armatures being mounted in such a way that the arms of each armature are interlaced in order to have arms placed opposite each other and separated by gaps (22a);
   4) depositing a passivation layer (24) on said etched metallic layer;

   **characterised by** the following step,

   5) etching said passivation layer (24) at the two electrodes level, said etching being produced so as to extend, at the gaps (22a) level, between the arms placed opposite each other, in the last dielectric layer (16), and the etching being carried out in such a way as to remove the passivation zones of the passivation layer located on the arms.

2. Method according to claim 1, **characterised in that** it further comprises a step 6) consisting of depositing an anticorrosion protective layer (26) which protects the metallic layer from corrosion.

3. Method according to claims 1 or 2, **characterised in that** it further comprises a step 7) of etching said passivation layer (24) at the level of at least one contact area which is etched during step 3).

4. Method according to claim 3, **characterised in that** it further comprises a step 8) of depositing a polyimide layer (29) on the last deposited layer.

5. Method according to claim 4, **characterised in that** it further comprises a step 9) of etching said polyimide layer (29) at the contact areas (23) in order to make it possible to arrange contact means.

6. Method according to claim 3, **characterised in that** it further comprises a step 8bis) of arranging contact means.

7. Method according to claim 6, **characterised in that** it further comprises a step 10) of depositing a polyimide layer (29) on the last deposited layer.

8. Method according to claim 1, **characterised in that** it further comprises a step 5bis) of cleaning said sensor (1).

9. Method according to claim 6, **characterised in that** said step 8bis), of arranging the contact means, uses a deposition technique for the fixing layer, known as electroless.

10. Method according to one of the claims 1 to 5, **characterised in that** said steps follow one after the other without interrupting the conditions necessary for their production.

11. Humidity sensor (1) obtained by the production method according to one of claims 1 to 10.

# Fig. 1

# Fig. 2

# Fig. 3

Fig. 4

16
18a
16
16
14
12
10

18

Fig. 4'

24a

22

18

Fig. 5

29
26
1

16
18a
16
16
14
12
10

18

## Fig. 6

## Fig. 7

## Fig. 8

# Fig. 9

# Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2420826 A

**Littérature non-brevet citée dans la description**

- **GU et al.** A novel capacitive-type humidity sensor using CMOS fabrication technology. *Sensors and Acuators B,* 2004